# NOUVEAU FASCICULE DE BREVET EUROPEEN

(11) **EP 0 275 789 B2**
(45) Date de publication et mention de la décision concernant l'opposition: **11.02.1998**
(45) Mention de la délivrance du brevet: 24.06.1992
(21) Numéro de dépôt: 87402979.6
(22) Date de dépôt: 23.12.1987
(51) Int. Cl.: E05B 49/00

(54) **Dispositif à code modifiable de protection contre le vol pour véhicules automobiles**
Diebstahlsicherung mit einstellbarem Kode für Kraftfahrzeuge
Anti-theft device with adjustable code for automotive vehicles

(30) Priorité: 31.12.1986 FR 8618445
(43) Date de publication de la demande: 27.07.1988
(73) Titulaire: AUTOMOBILES PEUGEOT, 75116 Paris (FR); AUTOMOBILES CITROEN, 92200 Neuilly-sur-Seine (FR)
(72) Inventeur: De Vaulx, Louis, F-78000 Versailles (FR)
(74) Mandataire: Pinchon, Odile

(56) Documents cités:
- WO-A-80/01477
- DE-A- 3 312 800
- FR-A- 2 545 632
- GB-A- 2 108 189
- US-A- 4 206 491

## Description

La présente invention est relative À la protection notamment des véhicules automobiles et se rapporte plus particulièrement à la protection contre le vol de véhicules équipés de dispositifs électroniques à microprocesseur de controle d'un organe du véhicule, tel que le moteur, la boîte de vitesses ou autre.

On a déja proposé d'assurer la protection de véhicules à l'aide d'un dispositif de télécommande comprenant un boîtier d'émission d'un message codé préétabli et, à bord du véhicule, un récepteur du message codé, couplé à un décodeur qui, après vérification de la conformité du code émis par l'émetteur à celui du propriétaire du véhicule, commande l'alimentation de moyens d'ouverture électrique des portes du véhicule.

De tels dispositifs présentent l'inconvénient d'être inefficaces lorsqu'il est possible d'accéder à l'intérieur du véhicule par exemple en brisant une vitre ou en mettant à profit une vitre entrouverte.

On connaît d'après le GB-A-2 108 189 un dispositif de protection contre le vol d'un véhicule automobile muni d'un dispositif électronique de contrôle d'un organe du véhicule en l'occurence un pène de déblocage de la colonne de direction du véhicule.

On connaît en outre d'après US-A-4 206 491, un dispositif de verrouillage de l'ouverture des portes d'un véhicule automobile, du type à code fixe, modifiable temporairement.

Le code initial fait partie intégrante d'un processeur que comporte le dispositif et ne peut être changé. Les sécurités prises pour l'introduction et la mémorisation du code dit de "convenience" sont faibles dans la mesure où ce code est mémorisé dans une mémoire volatile pouvant s'effacer inopinément lors d'une coupure de la batterie d'alimentation.

On connaît également, d'après FR-A-2 545 632, un dispositif de protection contre le vol, notamment d'un véhicule automobile, muni d'un dispositif électronique de contrôle d'un organe principal et d'un organe annexe tel que le moteur. Ce dispositif comporte un clavier d'introduction d'un code d'utilisateur, des moyens de conversion constitués par un microprocesseur des données d'entrée provenant du clavier en un message de sortie contenant le code d'utilisateur, des moyens programmables de mémorisation d'un code de déverrouillage du dispositif de contrôle moteur, faisant partie du dispositif de contrôle et des moyens de comparaison du code de déverrouillage stocké dans lesdits moyens de mémorisation avec le code d'utilisateur et des moyens de déverrouillage du dispositif électronique de contrôle lors de la coïncidence du code de déverrouillage avec le code d'utilisateur. Ce dispositif comporte en outre des moyens de remplacement du code de déverrouillage du dispositif de contrôle du moteur par un nouveau code de déverrouillage par action sur le clavier, lesdits moyens de remplacement comprenant le clavier auquel sont associés lesdits moyens de conversion, lesdits moyens de comparaison et lesdits moyens de mémorisation.

Toutefois, dans ce dispositif, un changement de code est effectué à chaque verrouillage, un message de verrouillage étant constitué de l'ordre de verrouillage suivi du code qui permettra le déverrouillage suivant. C'est-à-dire qu'à chaque verrouillage, il y a effacement du code précédent et réinscription du nouveau code dans la mémoire non volatile.

Ce dispositif de changement de code présente des inconvénients :

En particulier, n'importe qui peut introduire un nouveau code dans un dispositif déverrouillé, y compris l'utilisateur lui-même par inadvertance (le nouveau code alors introduit n'ayant dans ce cas pas été mémorisé par l'utilisateur).

En outre, cette procédure de changement de code est difficile à mettre en oeuvre car elle suppose que l'utilisateur ait à taper son code avant chaque verrouillage et avant chaque déverrouillage.

L'invention vise à remédier aux inconvénients des dispositifs connus en mettant à profit la présence d'un microprocesseur dans les véhicules munis d'un dispositif de contrôle électronique du fonctionnement notamment du moteur pour assurer la protection d'un véhicule contre le vol.

Elle a donc pour objet un dispositif de protection contre le vol notamment d'un véhicule automobile muni d'un dispositif électronique de contrôle d'un organe du véhicule tel que le moteur, comportant un clavier d'introduction d'un code d'utilisateur, des moyens constitués par un microprocesseur de conversion des données d'entrée provenant du clavier en un message de sortie contenant ledit code d'utilisateur, des moyens programmables de mémorisation du code de déverrouillage du dispositif de contrôle du moteur, faisant partie du dispositif de contrôle, des moyens de comparaison, faisant partie du dispositif de contrôle, du code de déverrouillage stocké dans lesdits moyens de mémorisation avec le code d'utilisateur contenu dans ledit message provenant du clavier et de déverrouillage dudit dispositif électronique de contrôle du moteur lors de la coïncidence du code de déverrouillage contenu dans les moyens de mémorisation avec le code d'utilisateur contenu dans ledit message de sortie, une mémoire d'état programmable et rémanente permettant de mémoriser l'état verrouillé ou déverrouillé du dispositif électronique de contrôle et des moyens de remplacement du code de déverrouillage du dispositif de contrôle du moteur par un nouveau code de déverrouillage par action sur ledit clavier, lesdits moyens de remplacement comprenant ledit clavier auquel sont associés lesdits moyens de conversion, le microprocesseur du dispositif de contrôle du moteur et lesdits moyens de mémorisation,
lesdits moyens de mémorisation du code de déverrouillage du dispositif électronique de contrôle du moteur comprenant une mémoire permanente de stockage du code de déverrouillage en vigueur et une mémoire temporaire de stockage soit de ce même code de déverrouillage en vigueur lors du fonctionnement du dispositif avec un code d'utilisateur établi, soit d'un nouveau code de déverrouillage composé par l'utilisateur sur le clavier, cette composition étant encadrée par deux actionnements sur une touche de commande de changement de code, et destiné à être substitué au code de déverrouillage en vigueur stocké dans la mémoire permanente,
la procédure de stockage dans la mémoire temporaire du nouveau code de déverrouillage n'étant autorisée que pendant une temporisation initiée après la coïncidence entre le code d'utilisateur établi et la mémoire permanente,
et, à chaque déverrouillage, le contenu des mémoires permanente et temporaire étant aligné sur le contenu de la mémoire permanente ou temporaire dans laquelle est stocké le code ayant permis le déverrouillage.

L'invention sera mieux comprise à l'aide de la description qui va suivre, donnée uniquement à titre d'exemple et faite en se référant aux dessins annexés, sur lesquels :
- la Fig. 1 est une vue schématique d'un dispositif de protection suivant l'invention ;
- les Fig.2 à 4 sont des organigrammes destinés à illustrer le fonctionnement du dispositif de protection de la Fig. 1.

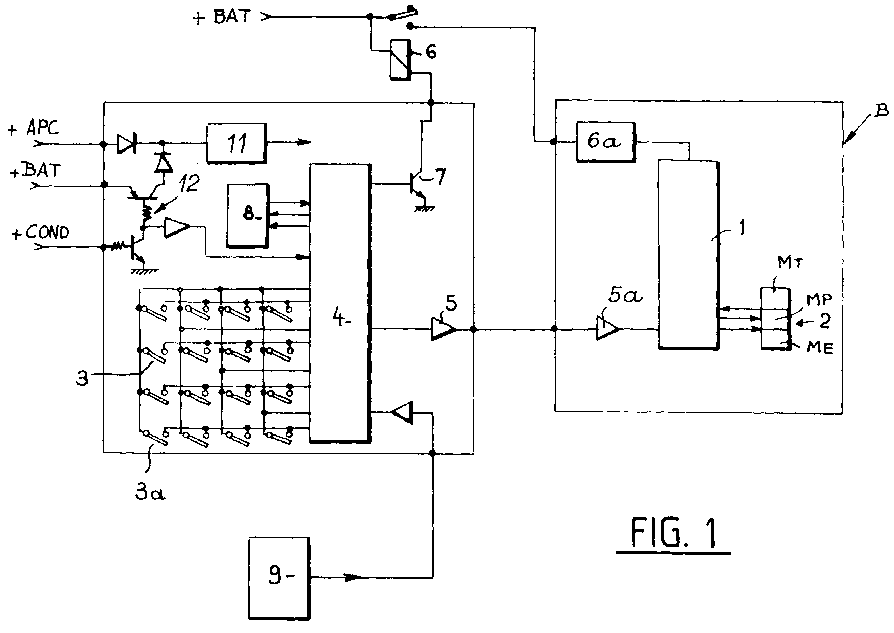

Le dispositif de protection représenté à la Fig.1 comporte un microprocesseur 1 qui fait partie du boîtier de contrôle du fonctionnement du moteur du véhicule qui peut être le boîtier de contrôle de l'allumage ou de l'injection.

Au microprocesseur 1 est associée une mémoire non volatile, électriquement programmable EE PROM 2 qui comporte trois parties associées à la fonction antivol à savoir une mémoire temporaire MT, une mémoire permanente MP et une mémoire d'état du boîtier de contrôle du moteur ME.

Le dispositif comporte en outre un clavier 3 d'entrée de données associé à un microprocesseur 4 connecté au microprocesseur 1 du boîtier de contrôle par un amplificateur 5 et un circuit d'adaptation 5a. Le clavier 3 comporte une touche 3a de commande de changement de code.

Une sortie du microprocesseur 4 est en outre connectée à un relais 6 de commande de l'alimentation 6a du boîtier de contrôle du moteur, par l'intermédiaire d'un transistor 7.

Le dispositif est complété par un circuit 11 d'alimentation du microprocesseur 4 lors de l'établissement du contact + APC et par un dispositif 12 de réception de l'ordre + COND de verrouillage du boîtier de contrôle B à transmettre à ce dernier par le microprocesseur 4.

Le dispositif 12 commande en outre l'alimentation 11 du microprocesseur 4 et l'alimentation 6a du boîtier de contrôle B par l'intermédiaire du microprocesseur 4, du transistor 7 et du relais 6.

Au microprocesseur 4 est en outre associée une mémoire 8 non volatile de type EE PROM destinée à stocker des codes émis par un appareil de commande auxiliaire 9, tel qu'un crayon optique de lecture de code à barres, un lecteur de carte magnétique, un récepteur de rayonnement infrarouge ou autre.

Le fonctionnement du dispositif qui vient d'être décrit est le suivant.

Le microprocesseur 4 assure l'acquisition des informations engendrées par l'enfoncement des touches du clavier 3, ces informations correspondant au code propre à l'utilisateur du véhicule et traduit ces informations sous la forme d'un message série qui est transmis par l'intermédiaire de l'amplificateur 5 et du circuit d'adaptation 5a à l'entrée du microprocesseur 1 du boîtier B de contrôle du moteur.

Le microprocesseur 4 contrôle également par l'intermédiaire du transistor 7 et du relais 6 l'alimentation du boîtier B de contrôle du moteur, ce qui lui permet, à la réception d'un ordre par exemple en provenance de la borne positive + COND de l'alimentation des moteurs de condamnation des portes du véhicule, d'alimenter le boîtier de contrôle B pendant un intervalle de temps nécessaire pour donner l'ordre de verrouillage du boîtier B. L'ordre est transmis sous forme de message série par le microprocesseur 4 et les circuits 5 et 5a au microprocesseur 1 qui le stocke dans la mémoire d'état ME.

Le message série provenant du microprocesseur 4 qui permet de déverrouiller le boîtier B de contrôle du moteur contient le code personnel de l'utilisateur.

Ce code est mémorisé à la fois dans la mémoire temporaire MT et dans la mémoire permanente MP de la mémoire 2. Il est également appelé code de déverrouillage du boîtier de contrôle.

Le code parvenant au microprocesseur 1 est successivement comparé au code contenu dans la mémoire temporaire MT et au code contenu dans la mémoire permanente MP.

S'il y a coincidence entre le code contenu dans le message reçu et ceux contenus dans les mémoires MT et MP, la mémoire d'état ME passe à l'état déverrouillé et le moteur peut être mis en route.

Dans le cas contraire, la mémoire d'état ME reste verrouillée, ce qui empêche le démarrage du moteur.

Si l'utilisateur veut modifier le code de déverrouillage du boîtier B de contrôle du moteur, il entre d'abord par l'intermédiaire du clavier 3,le code précédent qui déverrouille le boîtier de contrôle B d'après la procédure précédemment décrite.

Il appuie sur la touche 3a de changement de code, forme sur le clavier 3, le nouveau code et valide l'opération par un nouvel actionnement de la touche 3a. Ce nouveau code est alors envoyé au boîtier 8 qui le mémorise dans la mémoire temporaire MT.

Lors du déverrouillage suivant, l'utilisateur a le choix entre l'ancien code stocké dans la mémoire permanente HP et le nouveau code stocké dans la mémoire temporaire HT.

Le code qu'il compose alors sur le clavier 3 validera le code retenu.

Si l'utilisateur compose une nouvelle fois le nouveau code celui-ci deviendra le seul en vigueur.

En revanche, s'il fait une fausse manoeuvre ou s'il oublie le nouveau code, l'ancien code pourra être utilisé et restera le seul code valable.

Un tel processus permet à la fois de s'affranchir des oublis, des fausses manoeuvres et des intentions malveillantes et éventuellement des erreurs de chargement des mémoires ou d'effacements inopinés.

Le processus est le suivant.

Le boîtier B de contrôle du moteur dispose du nouveau code dans la mémoire temporaire HT et de l'ancien code dans la mémoire permanente MP.

A l'arrivée d'un message provenant du microprocesseur 4, le microprocesseur 1 le compare avec le contenu de la mémoire HT, puis avec celui de la mémoire MP. S'il y a coincidence avec l'un des deux contenus, le microprocesseur 1 d'une part aligne le contenu des mémoires HT et MP avec le contenu du message et d'autre part, fait passer la mémoire ME à l'état déverrouillé, ce qui lui permet d'entrer dans la boucle de contrôle du moteur.

A chaque arrivée d'un message en provenance du clavier 3, il y a donc réactualisation du contenu des mémoires MT et MP ce qui confère au système une grande sécurité de fonctionnement.

En outre, la possibilité de changer facilement de code en toute sécurité et de disposer de deux mémoires MP et MT permet d'utiliser un code spécifique par exemple "0000" pour inhiber la fonction antivol, ce qui est intéressant lorsqu'on confie le véhicule à un garage.

Si le microprocesseur 1 du boîtier B reçoit le code "0000", il le transfère à la mémoire MT et n'accepte plus de verrouiller la mémoire ME. Par conséquent, le boîtier de contrôle B fonctionne comme si la fonction antivol n'existait pas.

Pour réactiver la fonction antivol, on opère comme pour un changement de code en envoyant le code correspondant à la mémoire MP, puis à nouveau ce même code encadré par deux actionnements de la touche 3a de changement de code du clavier 3.

A l'état neuf, et pour faciliter les opérations de montage, le boîtier B de contrôle du moteur est livré à l'état deverrouillé avec sa mémoire MT à l'état "0000", sa mémoire MP à un état connu, par exemple 0001", et sa mémoire ME à l'état déverrouillé.

La fonction antivol n'est donc pas encore activée.

Pour procéder à son activation on frappe sur le clavier 3 le code "0001", on enfonce la touche 3a de changement de code, on frappe sur le clavier 3 le code personnel à introduire et on appuie à nouveau sur la touche 3a de changement de code.

Pour supprimer définitivement le code d'origine, on procède au verrouillage du système puis à son déverrouillage avec le code personnel.

Afin d'augmenter le confort d'utilisation du système antivol, il est possible de déclencher l'émission du message série par le microprocesseur 4, à l'aide du dispositif de commande auxiliaire 9.

Le message délivré par le dispositif 9 est comparé par le microprocesseur 4 avec un code contenu dans la mémoire 8.

Préalablement, de la même manière que précédemment, l'utilisateur initialise la fonction antivol en provoquant la mémorisation de son code personnel dans le boîtier B de contrôle du moteur.

Puis, après avoir déverrouillé le système avec son code personnel à l'aide du clavier 3, il enregistre le code auxiliaire du dispositif de commande 9, par exemple un dispositif de télécommande infrarouge, dans la mémoire 8 associée au microprocesseur 4 en commandant une émission suivie d'un enfoncement de la touche 3a de changement de code qui valide l'opération.

Une fois que ce code auxiliaire est enregistré, chaque réception de ce même code par le microprocesseur 4 provoque l'émission par celui-ci du code d'utilisateur vers le boîtier B de contrôle du moteur et le déverrouillage dudit boîtier par action de la mémoire ME.

La sécurité est totale puisqu'une erreur d'enregistrement du code auxiliaire peut toujours être rattrapée par une seconde opération en utilisant les touches du clavier pour retaper le code utilisateur.

Une panne du système peut donc être compensée par une utilisation manuelle. Il est par ailleurs possible en cas de panne de changer aussi bien le clavier que le boîtier de contrôle du moteur et que le système auxiliaire sans outillage particulier de programmation, à partir du moment où l'on connaît le code utilisateur.

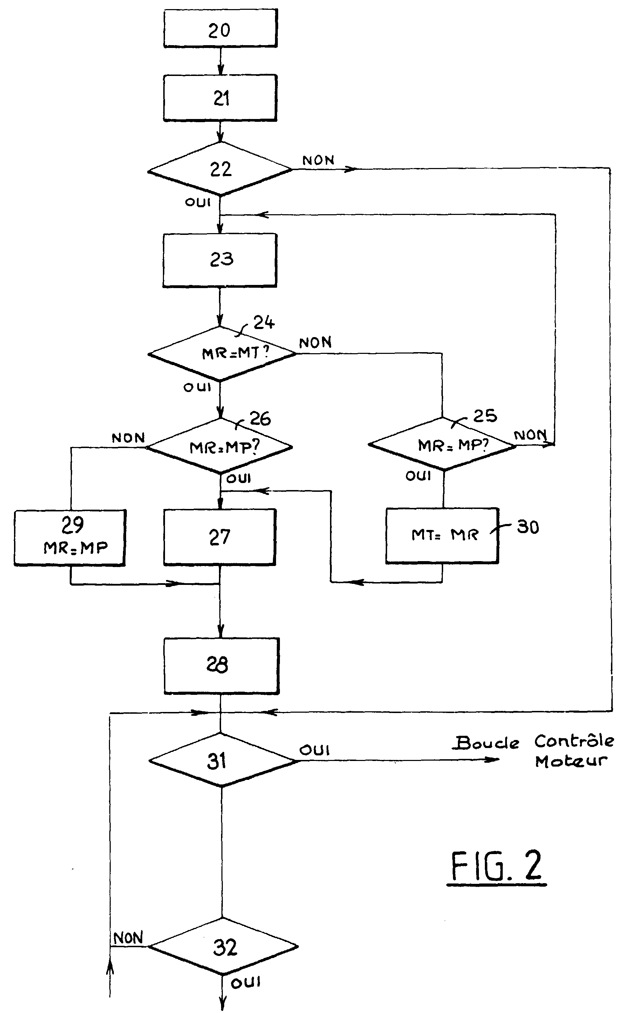

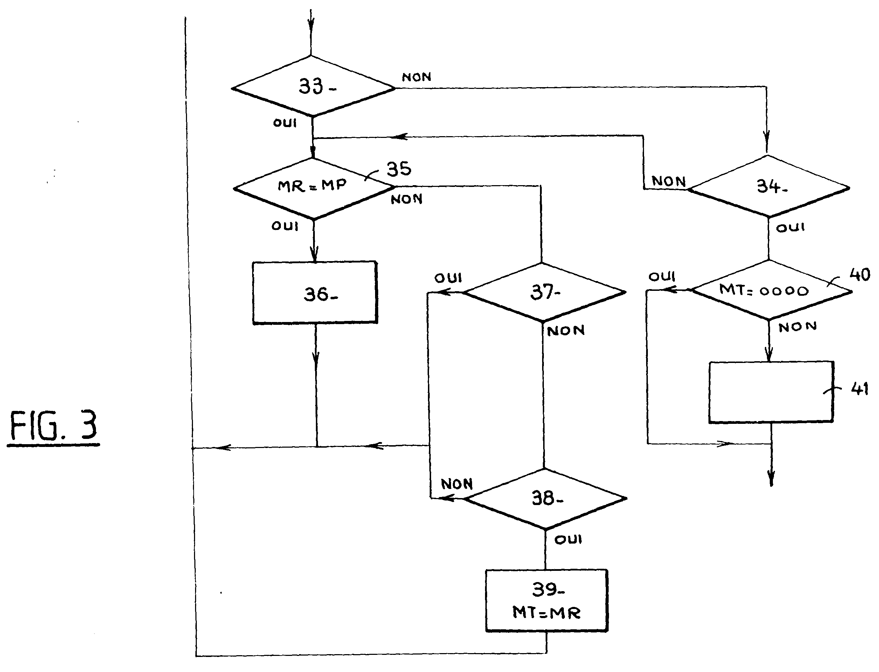

L'organigramme représenté aux Fig.2 et 3 décrit le fonctionnement du boîtier de contrôle du moteur sans dispositif de commande auxiliaire.

La mémoire ME du boîtier B étant verrouillée, celui-ci se met dans l'état de recevoir un message du microprocesseur 4.

Dans ce qui suit, on désignera par boîtier verrouillé, le fait que la mémoire ME du boîtier est à l'état verrouillé.

A cet effet, le boîtier est mis sous tension au cours de la phase 20 ce qui entraîne le début d'une temporisation T1 de 1 seconde au cours de la phase 21 suivie d'une phase 22 d'interrogation pour déterminer si le boîtier de contrôle B est verrouillé ou non.

Si le boîtier B est verrouillé, le message provenant du microprocesseur 4 et composé sur le clavier 3, est reçu au cours de la phase 23.

Ensuite, au cours de la phase 24, il y a interrogation pour déterminer si le message reçu MR coincide avec le code contenu dans la mémoire temporaire MT.

Si la réponse est non, on passe à la phase d'interrogation 25 pour déterminer si le message reçu HR coincide avec le code contenu dans la mémoire permanente HP. Si la réponse est à nouveau négative, le message est refusé comme ne correspondant à aucun des codes de déverrouillage et renvoyé à la phase de réception 23.

Si au contraire, la réponse à l'interrogation faite au cours de la phase 24 est oui, on passe à la phase d'interrogation 26 pour déterminer si le message reçu coincide également au code contenu dans la mémoire permanente MP.

Si la réponse à cette interrogation est affirmative, cela signifie que le code contenu dans le message est le code de l'utilisateur actuellement en vigueur et qu'aucune modification de ce code n'a été effectuée.

On initie alors une phase 27 de temporisation d'une durée T2 égale à 30s et on commande le déverrouillage du boîtier B de contrôle du moteur au cours de la phase 28.

Si la réponse à l'interrogation faite au cours de la phase 26 est négative, cela signifie que le message reçu MR contient le nouveau code HT destiné à être substitué au code de déverrouillage contenu dans la mémoire MP et on procéde alors au cours de la phase 29, à la substitution du code contenu dans la mémoire HP par le code contenu dans la mémoire HT, après quoi, le boîtier B peut être déverrouillé au cours de la phase 28. Cependant, on saute la phase de temporisation 27 pour interdire un autre changement de code immédiatement après ce changement de code.

Si la réponse à l'interrogation faite au cours de la phase 25 est oui, cela signifie que le code contenu dans le message reçu diffère du code contenu dans la mémoire temporaire HT, mais coincide avec le code de déverrouillage contenu dans la mémoire MP.

Alors, au cours de la phase 30, on aligne le code contenu dans la mémoire HT avec le code contenu dans la mémoire HP et on déclenche la phase 27 de temporisation de la même façon qu'à l'issue de la phase 26.

Eventuellement, on peut après un certain nombre de messages faux détectés au cours de la phase 25, interdire une nouvelle réception pendant un certain temps pour éviter une exploration systématique des codes.

Le boîtier B étant déverrouillé, soit à l'issue de la phase 28, soit en résultat de la phase d'interrogation 22, on procède à une phase d'interrogation 31 pour déterminer si le moteur tourne et à une phase d'interrogation 32 pour déterminer s'il y a réception d'un nouveau message provenant du microprocesseur 4.

Dans le cas où le moteur tourne effectivement, le boîtier B assure le contrôle de la fonction moteur sans se préoccuper des messages pouvant lui être envoyés.

Si le moteur ne tourne pas et qu'un message est reçu par le boîtier de contrôle B, on examine au cours de la phase 33 si la période de temporisation T1 est terminée.

Si le nouveau message est reçu avant la fin de la période de temporisation T1, on détermine au cours de la phase 34 si ce message est un message de verrouillage.

Si le nouveau message est reçu après la fin de la période de temporisation T1, on détermine au cours de la phase 35 si le message reçu MR coincide avec le code de déverrouillage stocké dans la mémoire permanente MP.

Si oui, on initialise à nouveau la temporisation T2 = 30s au cours de la phase 36 qui autorise le changement de code permettant ainsi d'effectuer un changement de code même si le boîtier de contrôle B (Fig.1) n'a pas été précédemment verrouillé.

S'il n'y a pas coincidence entre le nouveau message et le code de déverrouillage, on détermine au cours de la phase 37 si la temporisation T2 déclenchée au cours de la phase 27 (Fig.2) ou de la phase 36 est terminée.

Si la temporisation T2 n'est pas terminée, on s'assure au cours de la phase 38 que le message MR contient le nouveau code accompagné d'un attribut de demande de changement de code. Dans l'affirmative, au cours de la phase 39, on provoque en faisant MT = MR le stockage dans la mémoire temporaire HT du code contenu dans le message reçu, ce code étant destiné à devenir le nouveau code de déverrouillage.

Dans le cas contraire, on revient en début de boucle, c'est à dire à la phase 31 d'interrogation relative à la rotation du moteur.

On va maintenant revenir à la phase 34 relative à la nature du nouveau message MR reçu alors que le moteur du véhicule ne tourne pas et que la temporisation T1 n'est pas terminée.

Si le message reçu n'est pas un message de verrouillage, on passe à la phase d'interrogation 35 pour déterminer si le message reçu MR est égal ou non au code de l'utilisateur MP.

Si le message reçu est un message de verrouillage, le verrouillage ne peut être commandé que si la mémoire temporaire HT ne contient pas de code tel que " 0000" permettant d'inhiber la fonction antivol.

On s'assure de cette situation au cours de la phase 40. Si MT est différent du code d'inhibition de la fonction antivol, on provoque au cours de la phase 41 le verrouillage du boîtier B (Fig.1) en mettant la mémoire ME à l'état verrouillé.

Si HT est égal au code d'inhibition, on shunte la phase 41 de verrouillage.

A l'issue des phases 40 et 41, on revient au début de l'organigramme juste après la phase 20 de mise sous tension.

L'organigramme du microprocesseur 4 associé au clavier sans entrée supplémentaire pour la télécommande et sans mémoire auxiliaire 8 se résume à l'acquisition des signaux résultant de l'actionnement des touches du clavier 3 dans un ordre déterminé et ne présente pas de difficulté particulière.

En revanche, dans le cas où l'on veut déclencher le déverrouillage du boîtier B de contrôle du moteur par une émission automatique du code de l'utilisateur, il est nécessaire de mémoriser le code propre du dispositif auxiliaire 9.

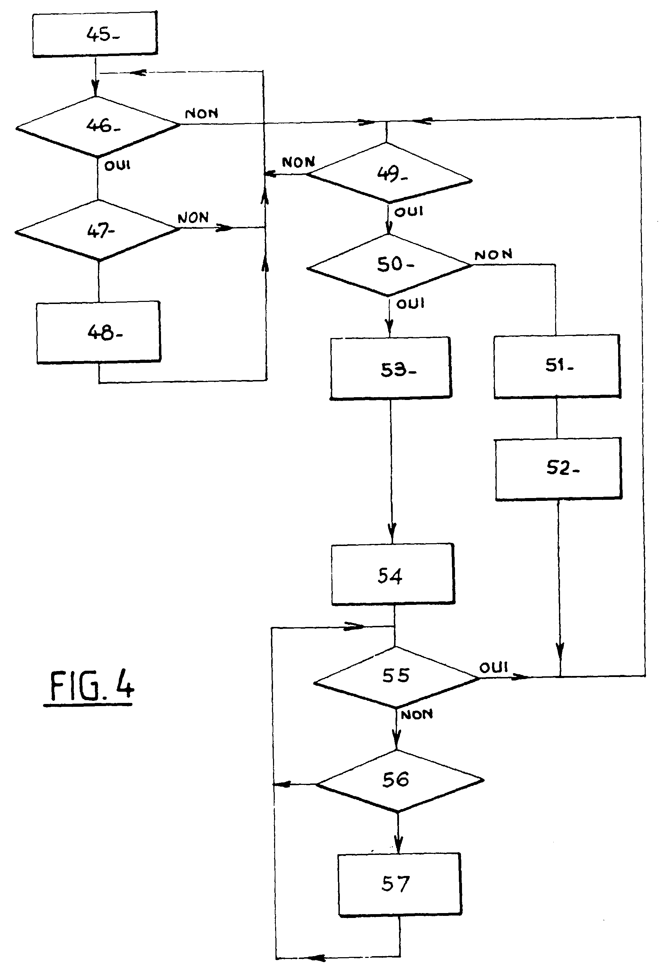

L'organigramme de la Fig.4 permet de comprendre le fonctionnement du dispositif dans ce dernier cas.

Lors de la mise sous tension au cours de la phase 45, le microprocesseur 4 du dispositif attend, soit un amorçage provenant du dispositif auxiliaire 9 sous la forme par exemple d'un signal IR de télécommande infrarouge, soit une impulsion en provenance du clavier 3. On procède au cours de la phase 46 à l'interrogation du système pour déterminer si un message IR a été reçu.

Si oui, on procède au cours de la phase 47 à la comparaison du message IR reçu avec le code du dispositif auxiliaire 9 mémorisé au préalable dans la mémoire auxiliaire 8 (Fig.1).

S'il y a coincidence entre ces deux codes, on commande au cours de la phase 48 l'envoi par le microprocesseur 4 vers le microprocesseur 1 du boîtier B d'un message contenant le code de l'utilisateur également mémorisé au préalable dans la mémoire auxiliaire 8.

Dans le cas contraire, on revient au début de la boucle pour attendre un nouveau message IR et aucun ordre de transmission du code de l'utilisateur n'est transmis au microprocesseur 4.

Si au cours de la phase 46, on constate qu'aucun message n'est reçu du dispositif de commande auxiliaire 9, on procède au cours de la phase 49 à une interrogation relative à la réception par le microprocesseur 4 d'un message composé sur le clavier 3.

Si tel n'est pas le cas, on se replace en attente d'un nouveau message.

Si un code a été reçu du clavier 3, on détermine au cours de la phase 50 si ce code est identique au précédent qui est mémorisé dans la mémoire auxiliaire 8.

S'il n'y a pas coincidence, on procède au cours de la phase 51 au chargement du nouveau code dans la mémoire auxiliaire 8 et, au cours de la phase 52, à l'envoi du message avec le nouveau code vers le microprocesseur 1 du boîtier de contrôle B, où il sera comparé selon la procédure décrite en référence aux Fig.2 et 3 avec les codes contenus dans la mémoire temporaire HT et dans la mémoire permanente HP de l'EE PROM 2.

S'il y a coincidence entre le code composé sur le clavier 3 et celui stocké dans la mémoire auxiliaire 8, on déclenche une phase 53 de temporisation d'une durée T3 = 10s, et au cours de la phase 54 l'envoi du message contenant le code d'utilisateur vers le microprocesseur 1 du boîtier de contrôle B.

On s'assure au cours de la phase 55 que la temporisation T3 a pris fin.

Si la temporisation T3 est en cours, on s'assure au cours de la phase 56 de la réception d'un message IR provenant du dispositif de commande auxiliaire 9.

Si tel est le cas, on procède au cours de la phase 57 à la mémorisation du message IR dans la mémoire auxiliaire 8.

Pour mémoriser le message IR, il faut entrer le code d'utilisateur à l'aide du clavier 3, et que celui-ci ait été utilisé au moins deux fois, par sécurité et pour éviter les malveillances.

On dispose alors de 10 secondes données par la phase de temporisation 53 pour transmettre le message IR à partir du dispositif de commande auxiliaire 9 au microprocesseur 4 qui commande sa mémorisation dans la mémoire auxiliaire 8.

Si le code composé sur le clavier 3 est différent de celui utilisé la fois précédente, il n'est pas possible de mémoriser le code IR mais le microprocesseur 4 envoie le message contenant le nouveau code au microprocesseur 1 du boîtier B de contrôle du moteur, qu'il coincide ou non avec les codes contenus dans ses mémoires HT et/ou HP.

Une personne mal intentionnée peut donc éventuellement modifier le contenu de la mémoire 8 relatif au code du message IR mais elle sera dans l'impossibilité de transmettre au boîtier B de contrôle du moteur un message qui sera capable de provoquer son déverrouillage, car toute modification du code du message IR ne peut se faire qu'en modifiant le code d'utilisateur stocké dans la mémoire 8.

Bien que le dispositif qui vient d'être décrit soit considéré comme étant appliqué à la protection contre le vol de véhicules munis d'un boîtier de contrôle du moteur, il est également applicable avec tout système de contrôle équipé d'un microprocesseur tel qu'une boîte de vitesses automatique ou autre.

## Revendications

1. Dispositif de protection contre le vol notamment d'un véhicule automobile muni d'un dispositif électronique (B) de contrôle d'un organe du véhicule tel que le moteur, comportant un clavier (3) d'introduction d'un code d'utilisateur, des moyens (4) constitués par un microprocesseur de conversion des données d'entrée provenant du clavier (3) en un message de sortie contenant ledit code d'utilisateur, des moyens (2) programmables de mémorisation du code de déverrouillage du dispositif de contrôle du moteur, faisant partie du dispositif de contrôle, des moyens (1) de comparaison, faisant partie du dispositif de contrôle, du code de déverrouillage stocké dans lesdits moyens de mémorisation avec le code d'utilisateur contenu dans ledit message provenant du clavier (3) et de déverrouillage dudit dispositif électronique (B) de contrôle du moteur lors de la coïncidence du code de déverrouillage contenu dans les moyens de mémorisation (2) avec le code d'utilisateur contenu dans ledit message de sortie, une mémoire d'état (ME) programmable et rémanente permettant de mémoriser l'état verrouillé ou déverrouillé du dispositif électronique de contrôle (B) et des moyens (3,4,1,2) de remplacement du code de déverrouillage du dispositif de contrôle du moteur par un nouveau code de déverrouillage par action sur ledit clavier (3), lesdits moyens de remplacement comprenant ledit clavier (3) auquel sont associés lesdits moyens de conversion (4), le microprocesseur (1) du dispositif (B) de contrôle du moteur et lesdits moyens de mémorisation,
lesdits moyens (2) de mémorisation du code de déverrouillage du dispositif électronique de contrôle du moteur comprenant une mémoire permanente (MP) de stockage du code de déverrouillage en vigueur et une mémoire temporaire (MT) de stockage soit de ce même code de déverrouillage en vigueur lors du fonctionnement du dispositif avec un code d'utilisateur établi, soit d'un nouveau code de déverrouillage composé par l'utilisateur sur le clavier (3), cette composition étant encadrée par deux actionnements sur une touche (3a) de commande de changement de code, et destiné à être substitué au code de déverrouillage en vigueur stocké dans la mémoire permanente (MP),
la procédure de stockage dans la mémoire temporaire (MT) du nouveau code de déverrouillage n'étant autorisée que pendant une temporisation (T2) initiée après la coïncidence entre le code d'utilisateur établi et la mémoire permanente (MP),
et, à chaque déverrouillage, le contenu des mémoires permanente (MP) et temporaire (MT) étant aligné sur le contenu de la mémoire permanente (MP) ou temporaire (MT) dans laquelle est stocké le code ayant permis le déverrouillage.

2. Dispositif de protection suivant la revendication 1,
caractérisé en ce que lesdits moyens (2) de mémorisation du code de déverrouillage du dispositif électronique de contrôle du moteur sont constitués par une mémoire (2) électriquement programmable EEPROM.

3. Dispositif de protection suivant l'une des revendications 1 ou 2
caractérisé en ce qu'il comporte en outre un dispositif auxiliaire (9) de commande automatique de l'émission du code d'utilisateur ainsi qu'une mémoire auxiliaire programmable et rémanente (8) connectée auxdits moyens de conversion associés au clavier (3), ladite mémoire programmable (8) étant destinée à stocker d'une part le code propre du dispositif de commande auxiliaire (9) et d'autre part le code d'utilisateur et en ce que ledit microprocesseur (4) associé au clavier (3) constitue un dispositif de comparaison du code stocké dans ladite mémoire auxiliaire (8) avec le code qu'il reçoit de ce dispositif de commande auxiliaire, la transmission du code d'utilisateur vers ledit dispositif de contrôle à partir du microprocesseur (4) étant conditionnée par la coïncidence entre le code reçu du dispositif de commande auxiliaire (9) et le code stocké dans la mémoire auxiliaire (8).

## Patentansprüche

1. Diebstahlsicherungseinrichtung, insbesondere für ein Kraftfahrzeug, das mit einer elektronischen Einrichtung (B) für die Steuerung eines Fahrzeugelementes wie etwa des Motors ausgestattet ist, die mit einer Eingabetastatur (3) für einen Benutzercode, Mitteln (4) in Form eines Mikroprozessors für die Umwandlung der von der Tastatur (3) ausgehenden Eingangsdaten in eine den Benutzercode enthaltende Ausgangsmeldung, programmierbaren Mitteln (2) für die Speicherung des Freigabecodes der Motorsteuereinrichtung als Teil der Steuereinrichtung, Mitteln (1) für den Vergleich des in den Speichermitteln gespeicherten Freigabecodes mit dem in der von der Tastatur (3) ausgehenden Meldung enthaltenen Benutzercode und für die Freigabe der elektronischen Einrichtung (B) für die Steuerung des Motors, wenn der in den Speichermitteln (2) enthaltene Freigabecode mit dem in der Ausgangsmeldung enthaltenen Benutzercode übereinstimmt, die Teil der Steuereinrichtung sind, einem Zustandsspeicher (ME), der programmierbar und remanent ist und die Ablage des verriegelten oder entriegelten Zustandes der elektronischen Steuereinrichtung (B) ermöglicht, und mit Mitteln (3, 4, 1, 2) für die Ersetzung des Freigabecodes der Motorsteuereinrichtung durch einen neuen Freigabecode mittels Betätigung der Tastatur (3) versehen ist, wobei die Ersetzungsmittel die Tastatur (3) umfassen, mit der die Umwandlungsmittel, der Mikroprozessor (1) der Motorsteuereinrichtung (B) und die Speichermittel verbunden sind,
wobei die Mittel (2) für die Speicherung des Freigabecodes der elektronischen Motorsteuereinrichtung versehen sind mit einem Langzeitspeicher (MP) für die Speicherung des derzeit gültigen Freigabecodes und mit einem temporären Speicher (MT) für die Speicherung entweder desselben, derzeit gültigen Freigabecodes, wenn die Einrichtung mit einem eingegebenen Benutzercode arbeitet, oder eines neuen Freigabecodes, der vom Benutzer auf der Tastatur (3) eingegeben wird, wobei diese Eingabe eingerahmt wird durch zwei Betätigungen einer Codeänderungssteuertaste (3a) und dazu bestimmt ist, den derzeit gültigen und im Langzeitspeicher (MP) gespeicherten Freigabecode zu ersetzen,
wobei die Speicheraktion in dem temporären Speicher (MT) des neuen Freigabecodes nur während eines Zeitintervalls (T2) nach Übereinstimmung zwischen dem etablierten Benutzercode und dem Langzeitspeicher (MP) möglich ist
und bei jeder Freigabe der Inhalt des Langzeit-(MP) und temporären Speichers (MT) an den Inhalt des Langzeit- (MP) oder temporären Speichers (MT) angeglichen wird, in welchem der Code abgelegt ist, der die Entriegelung zugelassen hat.

2. Sicherungseinrichtung gemäß Anspruch 1, dadurch gekennzeichnet, daß die Mittel (2) für die Speicherung des Freigabecodes der elektronischen Motorsteuereinrichtung von einem elektrisch programmierbaren Speicher EEPROM (2) gebildet werden.

3. Sicherungseinrichtung gemäß einem der Ansprüche 1 oder 2, dadurch gekennzeichnet, daß sie außerdem eine Hilfseinrichtung (9), die automatisch die Ausgabe des Benutzercodes steuert, sowie einen programmierbaren und remanenten Hilfsspeicher umfaßt, der mit den Mitteln für die Umwandlung an der Tastatur (3) verbunden ist, wobei der programmierbare Speicher (8) dazu vorgesehen ist, einerseits den geeigneten Code der Hilfssteuereinrichtung (9) und andererseits den Benutzercode zu speichern, und daß der mit der Tastatur (3) verbundene Mikroprozessor eine Einrichtung für den Vergleich des im Hilfsspeicher gespeicherten Codes mit dem Code, den er von dieser Hilfssteuereinrichtung empfängt, bildet, wobei die Übertragung des Benutzercodes vom Mikroprozessor (4) an die Steuereinrichtung davon abhängig gemacht wird, ob zwischen dem von der Hilfssteuereinrichtung empfangenen Code und dem im Hilfsspeicher (8) gespeicherten Code Übereinstimmung besteht.

## Claims

1. A device for protecting against theft in particular of a motor vehicle, provided with an electronic control device (B) for a component of the vehicle such as the engine, comprising a keyboard (3) for entering a user code, means (4) constituted by a microprocessor for converting input data from the keyboard (3) into an output message containing said user code, programmable memory means (2) for storing the code for unlocking the control device of the engine, forming part of the control device, means (1) forming part of the control device for comparing the unlocking code stored in said memory means with the user code contained in said message coming from the keyboard (3) and for unlocking said electronic control device (B) for the engine upon coincidence of the unlocking code contained in the memory means (2) with the user code contained in said output message, a programmable and non-volatile status memory (ME) making it possible to store the locked or unlocked state of the electronic control device (B) and means (3, 4, 1, 2) for replacing the unlocking code of the control device for the engine by a new unlocking code by action on said keyboard (3), said replacement means comprising said keyboard (3) with which are associated said converting means (4), the microprocessor (1) of the engine control device (B) and said memory means,
said memory means (2) for storing the unlocking code of the electronic control device for the engine comprising a permanent memory (MP) for storing the unlocking code in use and a temporary memory (MT) for storing either the same unlocking code in use in the course of operation of the device with an established user code or a new unlocking code composed by said user on the keyboard (3), this composition being surrounded by two actuations on a code-changing control key (3a) and intended to be substituted for the unlocking code in use stored in the permanent memory (MP),
the procedure for storing the new unlocking code in the temporary memory (MT) being permitted only during a time lag (T2) initiated after coincidence between the established user code and the permanent memory (MP),
and, on each instance of unlocking, the content of the permanent (MP) and temporary (MT) memories being aligned with the content of the permanent (MP) or temporary (MT) memory in which the code that permitted unlocking is stored.

2. A protecting device according to Claim 1,
characterised in that said memory means (2) for storing the unlocking code of the electronic control device for the engine are constituted by an electrically programmable EEPROM memory (2).

3. A protecting device according to either of Claims 1 or 2,
characterised in that it further comprises an auxiliary device (9) for automatically controlling the transmission of the user code and a programmable and non-volatile auxiliary memory (8) connected to said converting means associated with the keyboard (3), said programmable memory (8) being intended to store on the one hand the code pertaining to said auxiliary control device (9) and on the other hand the user code, and in that said microprocessor (4) associated with the keyboard (3) constitutes a device for comparing the code stored in said auxiliary memory (8) with the code that it receives from this auxiliary control device, the transmission of the user code to said control device from the microprocessor (4) being conditioned by the coincidence between the code received from the auxiliary control device (9) and the code stored in the auxiliary memory (8).
